Europäisches Patentamt

European Patent Office

Office européen des brevets

(11) Numéro de publication: **0 295 206**
**A1**

## (12) DEMANDE DE BREVET EUROPEEN

(21) Numéro de dépôt: **88810345.4**

(22) Date de dépôt: **27.05.88**

(51) Int. Cl.⁴: **B 23 H 7/26**

(30) Priorité: **10.06.87 CH 2189/87**
**12.10.87 CH 3979/87**

(43) Date de publication de la demande:
**14.12.88 Bulletin 88/50**

(84) Etats contractants désignés:
**CH DE ES FR GB IT LI SE**

(71) Demandeur: **CHARMILLES TECHNOLOGIES S.A.**
**8-10, rue du Pré-de-la-Fontaine Zone industrielle de Satigny**
**CH-1217 Meyrin 1 (CH)**

(72) Inventeur: **Briffod, Jean-Paul**
**Les Carelines chez Degradaz**
**F-74380 Lucinges (FR)**

(74) Mandataire: **Hugelin, Christiane**
**c/o CHARMILLES TECHNOLOGIES SA Case postale 373**
**CH-1217 Meyrin 1 (CH)**

(54) **Dispositif pour fixer un outil selon différentes orientations.**

(57) Dispositif pour fixer automatiquement un outil en position de travail sur une tête d'usinage puis pour l'orienter differemment, sans le séparer de son porte-outil, après l'avoir séparé de cette tête, comportant un porte-outil et au moins un organe de préhension. Le porte-outil est agencé pour être successivement accouplé à l'organe de préhension alors qu'il est vérouillé à la tête d'usinage selon une première orientation, puis séparé de cette tête immobilisé selon une deuxième orientation, puis reverrouillé sur la tête selon la première orientation avant d'être libéré de l'organe de préhension.

L'organe de préhension est agencé pour effectuer une rotation d'angle prédéterminé, par exemple 90° pi 180°. tout en maintenant le porte-outil et son outil grâce à des moyens de préhension appropiés, telles des fourches coopérant avec des rainures ménagées dans le porte-outil.

FIG. I

## Description

### DISPOSITIF POUR FIXER UN OUTIL SELON DIFFERENTES ORIENTATIONS

L'invention a trait à un dispositif comportant un porte-outil et un organe de préhension permettant de fixer un outil en position de travail sur une tête d'usinage puis à orienter cet outil selon une deuxième direction, correspondant par exemple à une position de fabrication ou de rectification de cet outil. Elle concerne aussi l'utilisation d'un tel dispositif sur une machine pour usiner par électroérosion.

En électroérosion, en effet, il est avantageux de pouvoir rectifier (ou rafraîchir) ou même fabriquer une électrode-outil d'enfonçage sur la machine d'électroérosion elle-même, donc sans avoir à la démonter de son porte-outil et à la remonter sur une rectifieuse : ceci est plus simple, donc plus rapide, permet une meilleure précision et une automation. De plus, en utilisant une seule machine, on gagne de la place et surtout on réalise une économie substantielle, car cette rectification ou fabrication sont alors réalisées grâce à un outil auxiliaire actionnable par les mécanismes de précision et les commandes déjà prévues sur la machine d'enfonçage. Il peut s'agir d'un outil mécanique ou d'un outil usinant par électroérosion, tel, par exemple, qu'un fil-électrode.

On connaît déjà un tel dispositif, permettant d'utiliser la même commande numérique et surtout le même ensemble mécanique de haute précision pour déplacer soit la pièce à usiner, soit le fil de rectification, par rapport à l'outil d'enfonçage. Il est décrit dans la demande de brevet japonaise publiée sous le numéro 57-194828, selon laquelle les guides-fil et les organes d'alimentation en fil sont fixés sur le bac d'usinage; ils se déplacent donc solidairement avec la pièce à usiner, les guides-fil restant immobiles par rapport au bac. Un tel montage ne permet au fil-électrode que de découper l'outil d'enfonçage selon un plan parallèle aux axes X et Y du dispositif déplaçant le bac (et la pièce à usiner ainsi que le fil à découper) relativement à l'outil. Notons que l'outil d'enfonçage, s'il peut se déplacer le long de son axe, garde la même orientation (perpendiculaire au plan de travail XY) qu'il soit en position d'enfonçage ou en cours de rectification.

Ceci est également le cas pour le dispositif décrit dans les demandes japonaises publiées sous les numéros 61-159330, 61-159331, 61-159332 et 61-159333. Toutefois, grâce à un guide-fil mobile selon une direction perpendiculaire au plan de travail XY, on peut incliner le fil-électrode de façon à découper l'extrémité de l'outil d'enfonçage selon un plan qui ne soit pas nécessairement parallèle au plan d'enfonçage XY.

De même, le dispositif décrit dans la demande de brevet européenne publiée sous le numéro 217 188, permet lui aussi d'incliner le fil-électrode de manière à découper l'outil d'enfonçage selon un plan qui ne soit pas parallèle au plan d'enfonçage XY. L'outil d'enfonçage est monté de façon à pouvoir se déplacer le long de son axe, à tourner autour de lui, mais il garde toujours la même orientation (perpendiculaire au plan XY) qu'il soit en position de travail ou de rafraîchissement.

On connaît un autre dispositif permettant de déplacer les deux types d'outils (électrode d'enfonçage et fil-électrode) par rapport à la pièce à usiner ou de déplacer soit le fil-électrode, soit la pièce à usiner relativement à l'outil d'enfonçage. Ce dispositif décrit dans le brevet suisse 659 605, permet donc d'usiner la pièce également par découpage électroérosif. Les guides-fil sont montés sur le bâti. Un mécanisme, telle une table à mouvements croisés, permet de déplacer, selon des axes X et Y définissant le "plan de travail", la pièce à usiner relativement soit au fil-électrode, soit à l'outil d'enfonçage, ce dernier étant en position de travail. Elle permet également de déplacer l'outil d'enfonçage relativement au fil-électrode, lorsque cet outil est en position de rectification. L'outil d'enfonçage est monté sur un porte-outil permettant d'immobiliser l'outil dans deux positions distinctes, soit par rapport au bac d'usinage (position de rectification ou de fabrication) soit par rapport au bâti (position d'enfonçage), et lui permettant aussi de tourner autour de son axe B1. Le porte-outil est, de plus, mobile dans une direction orthogonale aux axes X et Y. Notons que cet axe B1, donc l'orientation de l'outil, reste parallèle au plan XY quelle soit la position de l'outil. Le support des guides-fil peut basculer autour d'un axe orthogonal à l'axe de l'outil et parallèle au plan XY. Ceci permet d'incliner le fil par rapport à la trajectoire à découper dans la pièce ou à l'axe de l'outil à rafraîchir. Ajoutons que la pièce est montée sur le bac de manière à pouvoir tourner autour d'un axe parallèle à l'axe de l'outil d'enfonçage. Toutes les translations et rotations nécessitées par ces différents types d'usinage sont effectuées en n'utilisant qu'un seul mécanisme de haute précision et une seule commande numérique programmée du façon appropriée. Mais cet agencement est compliqué et donc onéreux. De plus, il ne peut être réalisé sous forme d'un accessoire pouvant être ajouté après coup à une machine d'enfonçage classique. Notons que l'outil d'enfonçage reste là aussi toujours disposé parallèlement à une même direction.

Le but de la présente invention est un agencement permettant d'usiner, sur une machine d'enfonçage, un outil d'enfonçage de forme plus complexe qu'avec les moyens décrits dans la demande de brevet JP-57/194828, mais n'exigeant pas un mécanisme aussi compliqué et coûteux que celui décrit dans le brevet CH 659 605, et pouvant être ajouté sur une machine d'électroérosion par enfonçage classique, c'est-à-dire munie d'organes permettant un déplacement relatif entre la table de travail et l'outil selon trois axes perpendiculaires X, Y et Z, ainsi qu'une rotation de l'outil autour de son axe. Cet usinage de l'outil (fabrication ou rectification) doit, de plus, être réalisé sans intervention manuelle et sans avoir à démonter l'outil (en général fait d'un matériau relativement fragile, tel le graphite) de son porte-outil en cours d'usinage, ce qui pourrait modifier les positions de référence entre cet outil et la pièce à usiner. Enfin, il doit permettre des déplacements relatifs entre l'outil à rectifier et l'outil auxiliaire plus complexes que ceux des machines d'enfonçage classiques. Cet agencement comporte évidemment un outil auxiliaire, par exemple un fil-électrode avec des organes d'alimentation, de mise sous tension mécanique et d'évacuation de types connus, ainsi qu'un dispositif faisant l'objet de la présente invention.

L'objet de la présente invention est en effet un dispositif tel que défini à la revendication 1, qui permet d'orienter un outil maintenu dans un porte-outil d'abord en vue de son usinage (fabrication ou rectification), puis en vue de son utilisation en enfonçage.

Un autre objet de la présente invention est l'utilisation du dispositif ci-dessus sur une machine d'enfonçage par électroérosion, telle que définie à la revendication 14.

Contrairement aux dispositifs connus cités ci-dessus, la présente invention ne nécessite plus d'incliner le fil par rapport au plan XY. Les guides-fil sont fixes par rapport à ce plan, la direction du fil entre ces guides restant, par exemple, toujours parallèle au plan XY. Ceci permet de simplifier les organes permettant de faire défiler le fil-électrode. Un autre avantage de l'invention est qu'elle ne nécessite pas l'addition d'un mécanisme de haute précision pour effectuer des translations et des rotations mais seulement un porte-outil (ou un organe pouvant être accouplé à ce porte-outil) muni de dispositifs de fixation appropriés, apte à immobiliser de manière reproductible un outil selon plusieurs orientations distinctes. Il n'est pas nécessaire que les angles entre ces orientations soient prédéterminés avec une grande précision; il suffit de calibrer la commande électronique de manière à tenir compte d'une éventuelle déviation par rapport à la valeur de consigne de cet angle. La parfaite reproductibilité des angles en question par verrouillage du dispositif de fixation en plusieurs positions, est facile à réaliser. Le passage d'une orientation à l'autre peut être réalisé, par exemple, au moyen de vérins hydrauliques et/ou pneumatiques linéaires et rotatifs de faible précision, pouvant être arrêtés en un certain nombre de positions distinctes. De tels vérins peuvent être obtenus dans le commerce à des prix modérés.

Enfin, si l'invention est réalisée par adjonction de dispositifs auxiliaires sur une machine pré-existante, la précision d'usinage de cette dernière sera sauvegardée.

Le fil-électrode auxiliaire peut également être utilisé pour découper la pièce à usiner, par exemple avant sa finition par enfonçage, comme décrit dans le brevet suisse 659 605 cité ci-dessus.

L'usinage de l'électrode-outil peut aussi, selon une variante de la présente invention, être réalisé non plus par un fil-électrode, mais par un électrode d'enfonçage ou par un outil d'usinage mécanique, par exemple par une fraiseuse, fixé sur la tête d'usinage de la machine. Un tel agencement permet, lui aussi, d'utiliser la même commande numérique et le même ensemble mécanique de précision pour déplacer soit la pièce à usiner, soit la fraiseuse (ou l'outil auxiliaire d'un autre type) par rapport à l'outil d'enfonçage.

Dans ce qui suit, l'invention est exposée plus en détail à l'aide de dessins représentant seulement deux des nombreux modes d'exécution possibles de la présente invention.

La figure 1 est une vue détaillée d'un premier exemple de réalisation d'un porte-outil et d'un organe de préhension selon la présente invention, agencés pour permettre d'orienter un outil selon deux directions faisant un angle de 90°;

la figure 2 montre les deux positions relatives différentes entre l'outil d'enfonçage et le fil-électrode servant à l'usiner obtenues avec le dispositif de la figure 1;

la figure 3 est une vue d'ensemble d'une machine d'électroérosion par enfonçage sur laquelle est montée le dispositif de la figure 1;

la figure 4 représente schématiquement une deuxième réalisation de l'invention permettant cette fois d'orienter un outil selon deux directions faisant un angle de 180°;

la figure 5 représente la même réalisation que celle de la figure 4 où l'outil est en position de rectification;

la figure 6 montre des détails de l'un des organes de préhension utilisé dans la réalisation des figures 4 et 5.

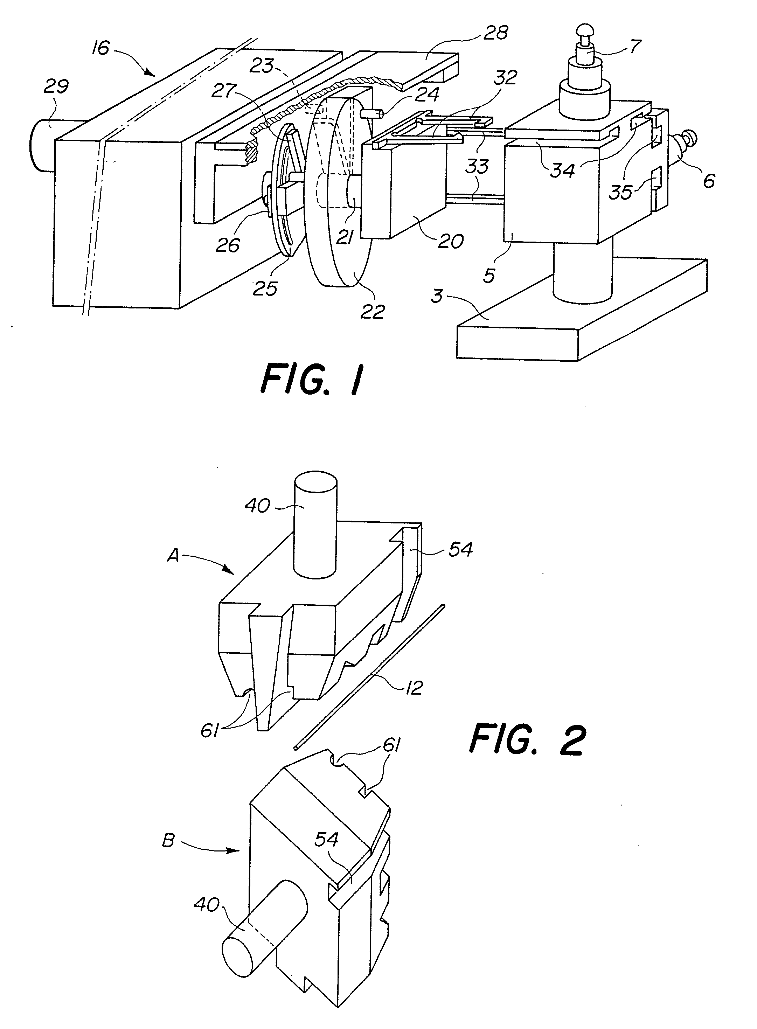

La figure 1 montre un porte-outil 5 en une position où il peut être saisi par l'organe de préhension 16. Ce porte-outil 5 comporte deux tétons 6 et 7 similaires mais orientés à 90° l'un de l'autre. Ces tétons sont conformés de manière à pouvoir s'engager dans une cavité de la tête d'usinage 4 et à y être verrouillés en une position déterminée avec précision. Le porte-outil est évidemment maintenu par la tête d'usinage au moyen du téton 7, mais pour plus de clarté la tête d'usinage a été omise de cette figure. L'organe 16 comporte une pièce 20 portée par un arbre 21 actionné par un vérin hydraulique ou pneumatique rotatif 22, capable de faire tourner la pièce 20 d'un angle égale à celui formé par les deux tétons 6 et 7. La rotation du vérin 22 est obtenue en amenant un fluide sous pression à l'un des embouts 23 ou 24. Un secteur 25 muni d'une butée ajustable 26 et un bras de positionnement 27 limitent l'angle de rotation et déterminent les positions extrêmes du vérin 22. Celui-ci est porté par une plaque-support 28 pouvant être déplacée parallèlement à l'axe de l'arbre 21 sous l'action d'un vérin linéaire 29. La pièce 20 est munie de deux paires de crochets élastiques 32 et 33 prévus pour s'engager dans deux paires de rainures correspondantes 34 et 35 prévues dans le porte-outil 5. Un déplacement vers la droite de la pièce 20 sous l'action du vérin linéaire 29 engage les crochets 32 et 33 dans les rainures 34 et 35 du porte-outil 5 et le maintient après le déverrouillage et l'éloignement de la tête d'usinage. Un quart de tour du vérin rotatif 22 amène ensuite le porte-outil 5 dans sa nouvelle orientation de manière que le téton 6 soit orienté comme l'était précédemment le téton 7 et donc comme la cavité de la tête d'usinage. Celle-ci est alors rapprochée du porte-outil 5 jusqu'à engagement et verrouillage du téton 6 dans cette cavité. Finalement, le vérin linéaire 29 est actionné de manière à rétracter la pièce 20 vers la gauche ce qui fait glisser les crochets 32 et 33 hors des rainures 34 et 35 du porte-outil 5.

Remarquons que le vérin linéaire 29 n'est pas indispensable, puisque le déplacement relatif de l'organe 20 et du porte-outil 5 peut aussi être réalisé en déplaçant la tête d'usinage. La précision des mouvements de l'organe de préhension 16 peut être faible, sans que ceci compromette le positionnement du porte-outil 5 sur la tête d'usinage, à condition que les tétons 6 et 7 soient conçus pour s'engager dans la cavité de la tête d'usinage même s'ils ne sont pas parfaitement en regard de celle-ci et que leur verrouillage dans cette cavité soit indépendant de leur alignement initial, ce qui est facile à réaliser.

La figure 2 montre un outil d'enfonçage orienté dans deux directions différentes par rapport au fil-électrode 12. Cet outil possède une tige 40 destinée à être fixée dans le porte-outil (non représenté dans la figure 2). Supposons, pour fixer les idées, qu'en position d'enfonçage, l'outil est orienté comme en A. Il peut évidemment être également orienté comme en A lors de sa fabrication ou rectification. On voit que ce changement d'orientation permet d'usiner avec le fil 12 aussi bien l'encoche 54 que les encoches 61, ce qui est impossible en n'utilisant que les quatre degrés de liberté X, Y, Z et C que possède la tête d'usinage par rapport au fil.

L'organe 16 est manifestement peu onéreux et surtout il peut être monté après coup et sans grands frais sur des machines déjà existantes.

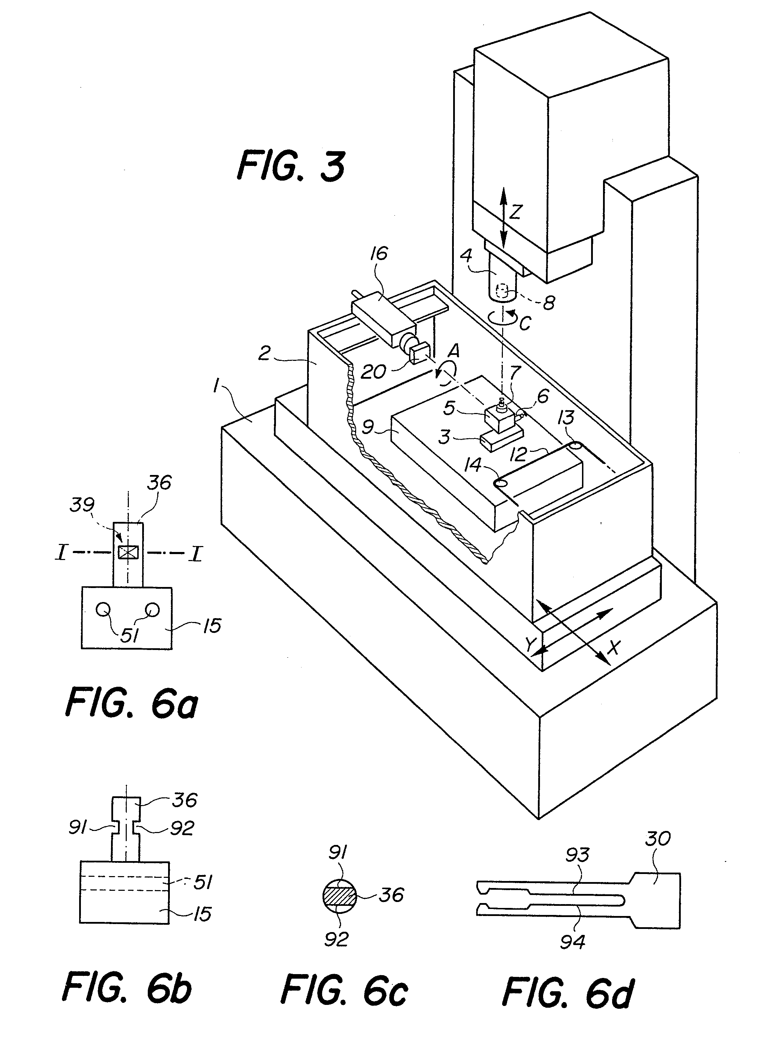

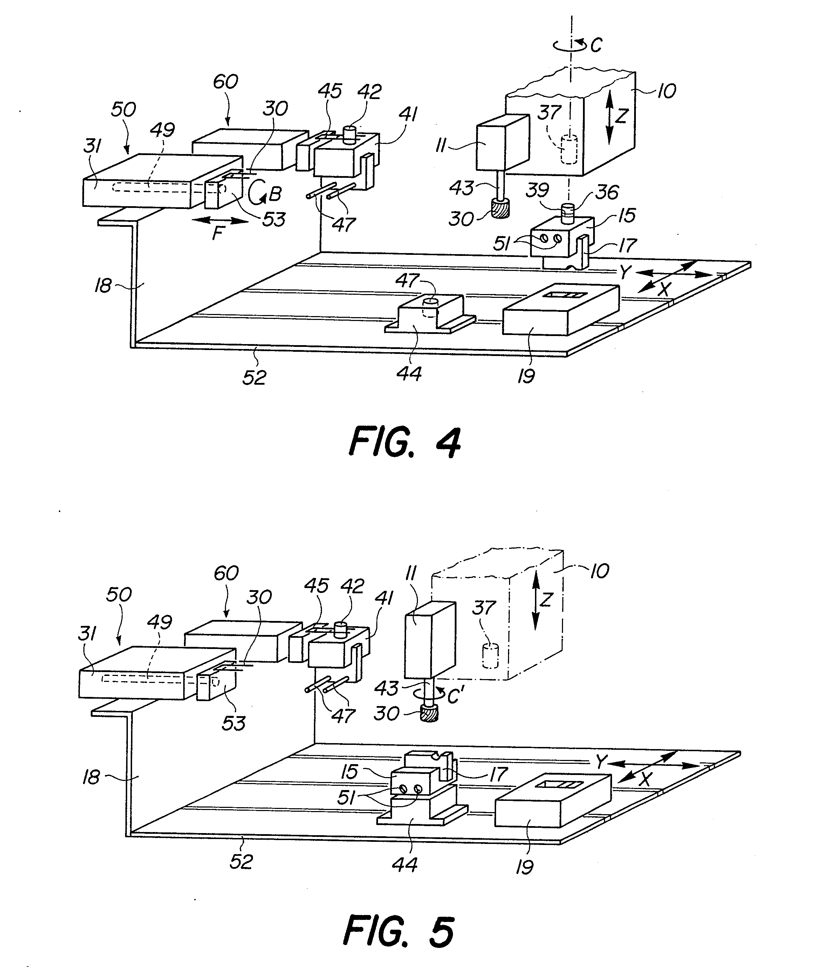

La figure 3 représente, de manière fortement schématisée, un machine d'enfonçage par électroérosion utilisant le dispositif selon l'invention. Le chiffre de référence 1 désigne le bâti de la machine et 2 le bac dans lequel est fixée (par des moyens non représentés) la pièce à usiner 9. Le bac est mobile horizontalement dans deux directions perpendiculaires X et Y, tandis que la translation selon l'axe Z orthogonal aux axes X et Y, nécessaire pour éroder la pièce 9 au moyen d'une électrode-outil 3 est obtenue par une tête d'usinage 4 mobile. Un porte-outil 5 est fixé sur cette tête 4 et porte l'outil 3. En plus de son mouvement vertical Z, la tête d'usinage 4 (et donc l'outil 3) peut tourner autour d'un axe parallèle à Z, ainsi qu'il est indiqué par la flèche C. La figure 3 représente l'outil 3 engagé dans le porte-outil 5, mais, pour la clarté du dessin, l'ensemble de ces deux pièces est montré séparé de la tête 4. Les opérations d'usinage sont de deux sortes : soit l'outil 3 érode par étincelage la pièce à usiner 9, soit l'outil lui-même est érodé au moyen d'un fil-électrode 12 tendu à l'horizontale entre deux guides 13 et 14 sensiblement immobiles par rapport au bac 2. Le fil 12 est dévidé entre ces guides 13 et 14 afin d'être constamment renouvelé. Les moyens mécaniques pour effectuer ce renouvellement, ainsi que les circuits pour créer les impulsions électriques soit entre la pièce 9 et l'outil d'enfonçage 3, soit entre ce dernier et le fil-électrode 12, sont bien connus de l'homme du métier et ne sont donc ni représentés au dessin ni décrits dans ce qui suit.

L'usinage de l'outil 3, sa fabrication et, le cas échéant, sa rectification, peuvent être réalisés en utilisant les mécanismes et les circuits de commande de la machine qui permettent les translations selon les axes X, Y et Z et la rotation C, ainsi que son générateur d'impulsions et le dispositif décrit à la figure 1 qui permet d'accoupler le porte-outil 5 selon deux orientations différentes à la tête d'usinage 4.

L'engagement du téton 6 dans la cavité 8 orientera l'outil dans une direction obtenue à partir de celle de la figure par rotation de 90° autour de l'axe X. Cette nouvelle orientation élargit considérablement les possibilités d'usinage, en particulier celles de fabrication et de rectification de l'outil 3 par le fil-électrode 12.

L'organe de préhension 16 est monté dans ou sur le bac 2, en un emplacement tel que les déplacements relatifs entre le bac 2 et la tête d'usinage 4 permettent d'amener le porte-outil 5 à proximité immédiate de cet organe. Ensuite la commande numérique (non-représentée) de la machine commande un rapprochement entre l'organe 16 et le porte-outil 5, de manière que les crochets du premier viennent s'engager dans les rainures du second, puis le déverrouillage du téton 7 engagé dans la cavité 8, et le retrait partiel de la tête 4, la rotation d'un quart de tour (flèche A) de la pièce 20, ensuite le mouvement de la tête 4 vers le porte-outil 5 jusqu'à ce que le téton 6 soit en regard de la cavité 8 et le verrouillage de ce téton, et finalement, un mouvement éloignant la tête 4 de l'organe 16 et l'amenant dans une position prédéterminée de rectification , en regard du fil-électrode 12. L'outil 3 a basculé de 90º autour d'un axe parallèle à X , c'est-à-dire normal au fil-électrode 12. La commande actionne ensuite de manière connue le découpage électroérosif de l'outil 3 par le fil 12. Puis elle commande de façon similaire à la description ci-dessus, la réorientation de l'outil en position d'enfonçage , qui se termine par le verrouillage du téton 7 dans la cavité 8 et le mouvement éloignant la tête 4 de l'organe 16 et l'amenant dans sa position de départ (dont les références précises ont été mémorisées par la commande numérique) lorsque l'usinage de l'outil est réalisé en cours d'enfonçage. La machine est alors prête pour reprendre l'usinage, avec un outil qui a été rectifié.

La figure 4 schématise certain des organes d'une machine à électroérosion utilisant un deuxième mode de réalisation d'un dispositif selon l'invention, dans lequel l'outil auxiliaire n'est plus un fil-électrode, mais une fraiseuse : une tête d'usinage 10, une table 52 pour supporter la pièce à usiner 19 et un porte-électrode 15 portant l'électrode-outil 17. Lors de l'enfonçage le porte-outil 15 est accouplé à la tête 10 par engagement et verrouillage d'un cylindre de fixation 36 dans une cavité réceptrice ou mandrin 37. Les éléments 36 et 37 représentent de manière symbolique, donc sans les détails tels qu'organes de verrouillage et d'interdiction de rotation, les parties mâles et femelles de dispositifs connus de fixation d'électrodes-outils, tel, par exemple, celui décrit dans demande européenne de brevet numéro 111 092. Pour alléger l'écriture, les éléments 36 et 37 seront appelés désormais "cylindre" et "mandrin". En pratique, la table 52 sera fixée dans un bac non représenté. Pour obtenir les mouvements nécessaires à l'usinage de la pièce 19 par l'outil 17, la table 52 est portée par un ensemble (non représenté) de chariots et de glissières permettant de la mouvoir en direction des doubles flèches X et Y, et la tête 10 peut être mue verticalement en direction de la double flèche Z par un mécanisme adéquat (également non représenté au dessin). Les mouvements relatifs de la tête 10 et de la table 52 seront décrits dans ce qui suit comme si cette dernière restait immobile, et si la tête se déplaçait selon X et Y. Finalement, un mouvement indiqué par une flèche C permet à la tête d'usinage 10 de tourner autour d'un axe vertical. Une fraiseuse 11 est montée sur la tête 10 et porte une fraise 30 montée sur une broche 43. Outre la rotation imprimée à la fraise 30, celle-ci peut donc être mue avec une grande précision selon les trois axes X, Y et Z par les mouvements de la tête 10. Un socle 44 monté sur la table 52 est muni d'un mandrin 47 analogue au mandrin 37, et peut donc, lui aussi, recevoir et maintenir le cylindre 36 pour immobiliser l'outil 17 de façon à ce que la face à rectifier soit disposée vers le haut. Cette face peut ensuite être usinée avec la précision désirable par la fraise 30 en se servant des mouvements selon les axes X, Y et Z dont les organes (mécanismes et commandes) sont déjà présents sur la machine à éroder.

Le transfert automatique du porte-outil 15 de la tête 10 au socle 44 et sa rotation de 180° nécessaire pour diriger le cylindre 36 tantôt vers le haut, tantôt vers le bas, sont effectués grâce aux organes de préhension 50 et 60 montés sur une paroi 18 solidaire de la table 52. L'organe 50 comporte un boîtier 31 dans lequel est engagé un axe 49 (esquissé en pointillé dans le dessin) parallèle à la table 52 et qui porte à une extrémité un support 53 sur lequel est montée une fourche 30. Le boîtier 31 contient en outre les organes nécessaires (par exemple des vérins) pour actionner l'axe 49 et le support 53 en direction de la double flèche F, ainsi que pour faire tourner ce dernier comme indiqué par la flèche B. L'organe 60 comprend une pièce 41 qui possède un cylindre 42 semblable au cylindre 36, une fourche 45 semblable à la fourche 30, deux tringles 47 dont le diamètre et l'écartement sont tels que ces tringles puissent s'engager facilement dans deux évidements correspondants 51 ménagés à cet effet dans le porte-outil 15. En position de travail, le cylindre 36 est engagé et verrouillé dans le mandrin 37. Si une rectification de l'outil s'avère nécessaire, la commande numérique (non représentée) commande

- l'arrêt de l'usinage, puis

- un mouvement de la tête vers l'organe 50 de façon qu'une gorge 39 décrite à la figure 6 et ménagée dans le cylindre 36 vienne se placer en regard de la fourche 30, puis

- un mouvement du support 53 vers la droite dans le dessin de façon que la fourche 30 s'engage dans la gorge 39,

- le déverrouillage du mandrin 37 , ce qui libère le cylindre 36,

- un mouvement de la tête 10 vers le haut, suffisant pour dégager le cylindre 36,

- une rotation du support 53 accouplé au porte-outil 15, de 180° autour d'un axe horizontal. Ceci donne au porte-outil l'orientation voulue pour l'accoupler au socle 44. Puis la tête 10 se déplace vers l'organe 60 jusqu'à ce qu'elle surplombe la pièce 41 de façon que le mandrin 37 soit en regard du cylindre 42, puis elle s'abaisse jusqu'à engagement et verrouillage du cylindre 42 dans le mandrin 37, et effectue un mouvement vers la droite du dessin afin de dégager la pièce 41 de la fourche 45. Toutefois, si la fourche 45 fait partie d'un organe 60 analogue à l'organe 50, le mouvement de la tête 10 vers la droite peut être remplacé par un retrait de la fourche 45 vers la gauche.

On commande ensuite

- le mouvement de la tête 10 vers l'organe 50 jusqu'à ce que les tringles 47 s'engagent dans les évidements 51 du porte-outil 15 qui est toujours suspendu en position retournée à la fourche 30, puis

- soit un retrait de la fourche 30 vers la gauche dans le dessin, soit un déplacement de la tête 10 vers la droite, ce qui dégage le porte-outil 15,

- un mouvement de la tête 10 vers le socle 44 de manière que le cylindre 36 vienne en regard du mandrin 47,

- un mouvement de la tête 10 vers le bas afin d'engager et de verrouiller ce cylindre dans ce mandrin,

- un mouvement de retrait de la tête 10 afin de dégager les tringles 47, puis, si nécessaire,

- un mouvement de la tête 10 vers l'organe 60 pour engager à nouveau la pièce 41 sur la fourche 45 suivi du déverrouillage et du dégagement du cylindre 42 du mandrin 37 et enfin de l'éloignement de la tête 10 de l'organe 60. On obtient ainsi la configuration illustrée à la figure 5, où l'outil 17 est immobilisé avec sa face à rectifier tournée vers le haut et prête à être usinée soit par la fraise 30, soit par une électrode-outil secondaire (non représentée au dessin) fixé à la tête 10 et que la tête 10 pourra aller elle-même chercher, de manière connue, dans un magasin adéquat. Le transfert inverse du porte-outil 17, ainsi que son retournement, peuvent être effectuées en inversant les opérations ci-dessus.

Il est à remarquer de façon générale, que le retournement du porte-outil par l'organe 50 peut être effectué soit lorsque celui-ci porte le porte-outil 15 directement (comme il est décrit ci-dessus) soit lorsque ce dernier est engagé sur la pièce 41 elle-même maintenue par l'organe 50. Avec cette dernière méthode il faut éviter que le porte-outil 15 ne se libère de la pièce 41 en cours de retournement, mais cette méthode peut néanmoins être utile dans certains cas. Bien qu'on n'ait décrit ici qu'un retournement complet du porte-outil, c'est-à-dire un changement d'orientation de 180°, il est évident que d'autres valeurs de cet angle peuvent être utilisées.

Les figures 6a à 6d montrent avec plus de détails comment la fourche 30 vient saisir le cylindre 36 en s'engageant dans la gorge 39. Afin d'interdire la rotation du cylindre , cette gorge 39 est formée de deux méplats 91 et 92 comme montré aux figures 6a à 6c. Tous les autres éléments de ces figures reprennent la numérotation déjà utilisée et, par gain de simplicité, le porte-outil 15 est représenté sans l'électrode-outil 17 et également sans le système de fixation entre ces deux éléments. La figure 6c montre une coupe I-I du cylindre 36 avec les méplats 91 et 92, auxquels correspondent les surfaces planes 93 et 94 de la fourche 30, ce qui permet son engagement dans la gorge particulière 39.

Finalement, on remarquera que dans ce deuxième exemple, le transfert et le changement d'orientation du porte-outil sont aussi effectués uniquement par les mouvements de la tête d'usinage, dont les mécanismes et les commandes numériques préexistent sur toute machine d'enfonçage, complétés par les mouvements d'organes de préhension. Ces derniers sont simples, peuvent par exemple être actionnées pneumatiquement et une faible précision est suffisante. Ceci permet une réalisation à la fois souple, peu onéreuse de ces dispositifs et leur installation facile sur des machines à électroérosion classiques.

**Revendications**

1. Dispositif pour fixer automatiquement un outil en position de travail sur une tête d'usinage puis pour l'orienter differemment , sans le séparer de son porte-outil, après l'avoir séparé de cette tête, comportant un porte-outil et au moins un organe de préhension,
- le porte-outil (5, 15) étant agencé pour être successivement accouplé à l'organe de préhension (16, 50) alors qu'il est vérouillé à la tête d'usinage (4, 10) selon une première orientation, puis séparé de la tête d'usinage (4, 10), immobilisé selon une deuxième orientation , puis reverrouillé sur la tête selon la première orientation avant d'être libéré de l'organe de préhension, et
- l'organe de préhension (16, 50) étant agencé pour effectuer une rotation d'angle prédéterminé tout en maintenant le porte-outil (5, 15) et son outil (3, 17) grâce à des moyens de préhension appropriés .

2. Dispositif selon la revendication 1, dans lequel le porte-outil (5, 15) comporte au moins un organe d'accouplement (6, 7, 36) correspondant à un organe complémentaire (8, 37) approprié ménagé sur la tête (4, 10), cet organe d'accouplement (6, 7, 36) étant agencé pour être immobilisé par rapport à la tête d'usinage grâce à un dispositif de verrouillage.

3. Dispositif selon la revendication 1, dans lequel l'organe de préhension (16, 50) comporte au moins une fourche (32, 33, 30) agencée pour maintenir l'ensemble outil/porte-outil.

4. Dispositif selon la revendication 3, dans lequel le porte-outil comporte des rainures (34, 35, 39) agencées de façon que la fourche (30, 32, 33) vienne s'y emboîter.

5. Dispositif selon la revendication 1, dans lequel la rotation de l'organe de préhension (16, 50) est commandée par des vérins (22) actionnés hydrauliquement ou pneumatiquement.

6. Dispositif selon la revendication 1, dans lequel l'organe de préhension (16, 50) est également agencé pour effectuer une translation dans la direction de son axe de rotation.

7. Dispositif selon la revendication 1, dans lequel le porte-outil (5, 15) est agencé pour être fixé à la tête d'usinage (4, 10) selon au moins deux orientations différentes, l'une correspondant à la position de travail de l'outil (3, 17) , et l'autre à une position dans laquelle l'axe de l'outil fait un angle prédéterminé avec l'axe de la tête d'usinage, l'organe de préhension (16, 50) étant agencé pour faire basculer l'ensemble outil-porte-outil entre ces différentes orientations.

8. Dispositif selon la revendication 1, dans lequel
- un premier organe de préhension (50) est agencé pour effectuer une rotation comprise entre 90° et 180°, tout en maintenant le porte-outil et son outil,
- un second organe de préhension (60) comporte des moyens de préhension appropriés (45) au maintien d'une pièce transporteuse (41) elle-même munie de moyens (47) appropriés au maintien du porte-outil (15) et de son outil (17) lors d'un déplacement horizontal et vertical et d'autres moyens (42) appropriés à sa fixation sur la tête d'usinage, le porte-outil (15) étant muni de moyens (51) de fixation appropriés aux moyens de maintien (47) de la pièce transporteuse (41) du second organe (60).

9. Dispositif selon la revendication 2, dans lequel le porte-outil (5) comporte plusieurs organes d'accouplement faisant entre eux un angle correspondant à celui que font entre elles les différentes orientations prévues pour l'outil.

10. Dispositif selon la revendication 9, dans lequel les organes d'accouplement sont constitués par deux tétons (6, 7) faisant un angle de 90°.

11. Dispositif selon la revendication 8, dans lequel le porte-outil (15) comporte un seul organe d'accouplement constitué par un cylindre (36) venant s'encaster dans un mandrin (37) prévu dans la tête d'usinage (10), ce cylindre (36) étant muni d'une rainure (39) dans laquelle viennent se loger les moyens de préhension du premier organe, constitués par une fourche (30).

12. Dispositif selon la revendication 8, dans lequel les moyens de fixation du porte-outil (15) sont constitués par des évidements (51) agencés pour que les moyens de maintien de la pièce transporteuse ,constitués par des tringles (47), viennent s'y encastrer.

13. Dispositif selon la revendication 8, dans lequel la pièce transporteuse (41) comporte le même moyen de fixation (42) sur la tête d'usinage que le porte-outil.

14. Utilisation sur une machine d'enfonçage par électroérosion d'un dispositif pour fixer automatiquement un outil en position de travail sur une tête d'usinage puis pour l'orienter differement sans le séparer de son porte-outil, comportant un porte-outil (5, 15) et au moins un organe de préhension (16, 50),

-le porte-outil (5, 15) étant agencé pour être successivement accouplé à l'organe de préhension (16, 50) alors qu'il est verrouillé à la tête d'usinage (4, 10) selon une première orientation, puis séparé de cette tête , puis immobilisé selon une deuxième orientation, puis verrouillé à nouveau sur la tête d'usinage selon la première orientation avant dêtre libéré de l'organe de préhension (16, 50), et

-l'organe de préhension (16, 50) étant agencé pour effectuer une rotation d'angle prédéterminé tout en maintenant le porte- outil (5, 15) et son outil (3, 17) grâce à des moyens de préhension appropriés (30, 32, 33), dans laquelle cette machine d'enfonçage comporte un outil d'usinage auxiliaire (12, 30).

15. Utilisation selon la revendication 14, sur une machine d'enfonçage comportant un bac d'usinage (2) se déplaçant horizontalement selon des mouvements croisés par rapport à une tête d'usinage (4) mobile verticalement et pouvant tourner autour de son axe, dans laquelle l'outil auxiliaire est un fil électrode (12) pour découper par électroérosion, défilant entre deux guides (13, 14) fixés soit sur un bâti solidaire de la table à mouvements croisés, soit sur le rebord du bac d'usinage (2).

16. Utilisation selon la revendication 14, sur une machine d'enfonçage comportant un bac d'usinage se déplaçant horizontalement selon des mouvements croisés par rapport à une tête d'usinage (10) mobile verticalement et pouvant tourner autour de son axe, dans laquelle l'outil auxiliaire est une fraiseuse (11, 30) fixée sur la tête d'usinage.

17. Utilisation selon la revendication 16, dans laquelle un socle (44) agencé pour maintenir le porte-outil (15) lors de son fraisage, est fixé sur la table à mouvements croisés (52).

18. Utilisation selon la revendication 15, dans laquelle

- les moyens de préhension de l'organe (16) sont constitués par des crochets (32, 33),

- le porte-outil (5) comporte des rainures (34, 35) de profil correspondant à ces crochets, et aux moins deux organes d'accouplement (6, 7) correspondant à un organe complémentaire (8) approprié ménagé sur la tête (4), et

- la machine d'enfonçage comporte une unité de commande numérique programmée de façon appropriée pour que la tête d'usinage (4), la table à mouvements croisés et l'organe de préhension (16) exécutent les opérations suivantes :

- positionnement de l'ensemble tête d'usinage (4) / porte-outil (5) / outil (3) face à l'organe de préhension (16),

- mouvement horizontal relatif de ces deux éléments de manière à engager les crochets (32, 33) dans les rainures (34, 35)

- déverrouillage du système fixant le porte-outil (5) à la tête d'usinage (4),

- mouvement vertical relatif, éloignant la tête (4) de l'ensemble organe de préhension (16) / porte-outil (5) / outil (3),

- rotation de l'ensemble organe de préhension (16) / porte-outil (5) / outil (3),

- mouvement vertical relatif, amenant la tête (4) face à cet ensemble et engageant l'un des organes d'accouplement (6, 7) du porte-outil (5) dans le moyen (8) correspondant ménagé sur la tête (4),

- verrouillage du système de fixation,

- mouvement horizontal relatif de l'ensemble tête d'usinage (4) / porte-outil (5) / outil (3) face, et de l'organe de préhension (16), de manière à dégager les crochets (32, 33) des rainures (34, 35),

- positionnement de l'ensemble tête d'usinage (4) / porte-outil (5) / outil (3) face au fil-électrode (12), en position prédéterminée de rectification, et

- découpage électroérosif de l'outil (3) par le fil-électrode (12).

19. Utilisation selon la revendication 15, dans laquelle

- la machine d'enfonçage est munie de deux organes de préhension (50, 60) dont les moyens de préhension sont des fourches (30, 45) et d'une pièce pièce transporteuse (41) elle-même munie d'une tringle (47) appropriée au maintien du porte-outil (15) lors d'un déplacement horizontal et vertical,

- le porte-outil (15) et la pièce (41) comportent des rainures (39) de profil correspondant à ces fourches, et un organe d'accouplement (36, 42) correspondant à un organe complémentaire (37) approprié ménagé sur la tête (10), et

- la machine d'enfonçage comporte une unité de commande numérique programmée de façon appropriée pour que la tête d'usinage (10), la table à mouvements croisés (52) et les organes de préhension (50, 60) exécutent les opérations suivantes :

- positionnement de l'ensemble tête d'usinage (10) / porte-outil (15) / outil (17) face à l'organe de préhension (50),

- mouvement horizontal relatif de ces deux éléments de manière à engager la fourche (30) dans les rainures (39),

- déverrouillage du système fixant le porte-outil (15) à la tête d'usinage (10),

- mouvement vertical relatif, éloignant la tête (10) de l'ensemble organe de préhension (50) / porte-outil (15) / outil (17),

- rotation de l'ensemble organe de préhension (50) / porte-outil (15) / outil (17),

- mouvement relatif amenant la tête (10) face à l'ensemble organe (60) / pièce (41) et engageant l'organe d'accouplement (42) de la pièce (41) dans le moyen (37) correspondant ménagé dans la tête (10),

- verrouillage du système de fixation,

- mouvement horizontal relatif de l'ensemble tête d'usinage (10) / pièce (41) et de l'organe de préhension (60) de manière à dégager la fourche (45),

- mouvement horizontal relatif de l'ensemble tête d'usinage (10) / pièce (41) et de l'ensemble organe de préhension (50) / porte-outil (15) de manière à engager les tringles (47) dans les évidements (51),

- deuxième mouvement horizontal relatif de ces deux éléments de manière à dégager la fourche (30) des rainures (39) et à amener l'ensemble tête (10) / pièce (41) / porte-outil (15) face au socle (44),

- mouvement vertical relatif engagement l'organe (36) du porte-outil dans le moyen (47) correspondant du socle (44),

- verrouillage du système de fixation,

- mouvement horizontal relatif de l'ensemble tête d'usinage (10) / pièce (41) et de l'ensemble socle (44) / porte-outil (15) / outil (17) de manière à dégager les tringles (47) des évidements (51),

- positionnement de l'ensemble tête d'usinage (10) / pièce (41) face à l'organe de préhension (60), mouvement horizontal relatif de ces deux éléments de manière à engager la fourche (45) dans les rainures correspondantes de la pièce (41),

- déverrouillage du système fixant la pièce (41) à la tête d'usinage (10),

- mouvement vertical relatif, éloignant la tête (10) de l'ensemble organe de préhension (60) / pièce (41),

- positionnement de l'ensemble tête d'usinage (10) / fraiseuse (30) face à l'ensemble socle (44) / porte-outil (15) / outil (17), en position prédéterminée de rectification, et

- rectification de l'outil (17) par la fraiseuse (30).

**FIG. 1**

**FIG. 2**

0295206

FIG. 3

FIG. 6a

FIG. 6b

FIG. 6c

FIG. 6d

FIG. 4

FIG. 5

Office européen des brevets

# RAPPORT DE RECHERCHE EUROPEENNE

Numero de la demande

EP  88 81 0345

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 469 058  (O'CONNOR)<br>* Colonne 4, lignes 3-14 *<br>----- | 1 | B 23 H   7/26 |

|  |  |
|---|---|
|  | DOMAINES TECHNIQUES RECHERCHES (Int. Cl.4)<br><br>B 23 H |

Le présent rapport a été établi pour toutes les revendications

| Lieu de la recherche | Date d'achèvement de la recherche | Examinateur |
|---|---|---|
| LA HAYE | 25-08-1988 | DAILLOUX C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)